# FASCICULE DE BREVET EUROPEEN

(11) **EP 4 081 383 B1**
(45) Date de publication et mention de la délivrance du brevet: **05.02.2025**
(21) Numéro de dépôt: 20821298.5
(22) Date de dépôt: 15.12.2020
(51) Int. Cl.: B29C 48/154

(54) **DISPOSITIF DE FABRICATION D'UNE ELECTRODE POUR BATTERIE COMPRENANT UNE EXTRUDEUSE INCORPORANT UN COLLECTEUR DE COURANT**
VORRICHTUNG ZUR HERSTELLUNG EINER ELEKTRODE FÜR EINE BATTERIE MIT EINEM EINEN STROMABNEHMER AUFWEISENDEN EXTRUDER
DEVICE FOR MANUFACTURING AN ELECTRODE FOR A BATTERY COMPRISING AN EXTRUDER HAVING A CURRENT COLLECTOR

(30) Priorité: 24.12.2019 FR 1915588
(43) Date de publication de la demande: 02.11.2022
(73) Titulaire: Ampere SAS, 92100 Boulogne-Billancourt (FR)
(72) Inventeur: BESNARD, Nicolas, 75015 Paris (FR); CHAUDOY, Victor, 75014 Paris (FR)
(74) Mandataire: Renault Group
(86) Numéro de dépôt international: PCT/EP2020/086244
(87) Numéro de publication internationale: WO 2021/130065

(56) Documents cités:
- JP-A- 2003 217 372
- US-A1- 2019 048 493

## Description

### Domaine technique de l'invention

La présente invention concerne le domaine des batteries électriques composées d'électrodes négatives et d'électrodes positives.

L'invention concerne plus particulièrement un dispositif de fabrication d'une électrode pour batterie.

### Arrière-plan technique

Dans le domaine des batteries électriques, notamment des batteries au lithium, sont connues des électrodes sous forme de plaque mince comprenant au moins une couche de matériau composite actif électrochimiquement, déposé sur un collecteur de courant. Ce dernier est généralement formé d'une couche fine de métal, par exemple une couche d'aluminium pour l'électrode positive.

Le document WO 2004/051769 A2 divulgue une méthode de mise en forme d'une électrode pour batterie en utilisant un dispositif d'extrusion. Précisément, ce dispositif d'extrusion comprend un poste de co-extrusion avec deux extrudeuses et un poste de laminage. Le poste de co-extrusion forme un ensemble réunissant une couche de matériau composite actif électriquement et une couche d'électrolyte. L'ensemble sortant du poste de co-extrusion est ensuite laminé sur un collecteur de courant dans le poste de laminage pour former un bloc d'électrode.

Le poste de laminage comprend deux cylindres contrarotatifs exerçant un appui pour assembler l'ensemble sortant du poste de co-extrusion et le collecteur de courant. Afin de garantir une planéité uniforme, des galets tendeurs sont installés en aval du poste de laminage pour maintenir une tension sur la bande de collecteur de courant.

Cependant, la structure du dispositif d'extrusion décrit plus haut reste complexe. Il requiert deux extrudeuses et à cela s'ajoute un poste de laminage. Le coût de la mise en place et d'utilisation de ce dispositif est donc élevé.

De plus, étant donné que l'assemblage de l'électrode est réalisé par un laminage de deux éléments solides, il est donc difficile de contrôler leur adhésion par la suite.

La demande de brevet JP2003217372A décrit un dispositif présentant des inconvénients similaires.

Au vu du problème précité, un objectif de l'invention est de simplifier le dispositif de fabrication des électrodes, et donc de réduire le coût de la mise place et de l'entretien dudit dispositif. En outre, un autre objectif de l'invention est d'assurer que les différentes couches de l'électrode soient bien adhérées les unes aux autres.

### Résumé de l'invention

Avec cet objectif en vue, l'invention propose un dispositif de fabrication d'une bande d'électrode pour batterie, ladite bande d'électrode comprenant au moins une couche de matériau composite actif électrochimiquement de part et d'autre d'une bande de collecteur de courant, le dispositif de fabrication comprenant :
- une extrudeuse comprenant :
   - un fourreau délimitant une chambre de mélange,
   - une tête d'extrusion donnant la forme à la bande d'électrode sortant de l'extrudeuse ; et
   - une vis d'extrusion disposée dans la chambre de mélange, Selon l'invention, la vis d'extrusion comprend :
      - un tube externe monté mobile en rotation sur lui-même dans la chambre de mélange, ledit tube externe comprenant des moyens d'entraînement configurés pour mélanger le matériau composite actif dans la chambre de mélange et pour provoquer un déplacement dudit matériau vers l'aval en direction de la tête d'extrusion;
      - un tube interne disposé au moins partiellement à l'intérieur du tube externe et de manière coaxiale avec dudit tube externe, ledit tube interne étant immobile par rapport au fourreau et comprenant une sortie située en amont de la tête d'extrusion.

En outre, selon l'invention, le dispositif de fabrication comprend des moyens d'avance et de déroulement configurés pour convoyer la bande de collecteur de courant à travers le tube interne et jusqu'à la tête d'extrusion.

Ainsi, le dépôt de la couche de matériau composite actif électrochimiquement sur le collecteur de courant est réalisé à l'intérieur de l'extrudeuse. Etant sous forme liquide dans l'extrudeuse, la couche de matériau composite adhère parfaitement à la bande de collecteur de courant et elle est répartie de manière uniforme sur ladite bande. La qualité d'adhésion entre les couches s'en trouve améliorée.

Par ailleurs, la structure du dispositif proposé est simplifiée, car il comprend une seule extrudeuse. Bien que l'extrudeuse soit composée de deux tubes différents, ceux-ci sont arrangés l'un dans l'autre de manière à former un arrangement compact permettant à la vis d'extrusion d'occuper le même volume que la vis d'extrusion d'une extrudeuse conventionnelle dans la chambre de mélange.

Selon d'autres caractéristiques de l'invention :
- le tube interne et les moyens d'avance et de déroulement sont agencés l'un par rapport à l'autre de manière à mettre la bande de collecteur de courant en suspension dans le tube interne ;
- le fourreau présente une forme de révolution dont l'axe de révolution est confondu avec un axe principal de la vis d'extrusion; et l'axe principal de la vis d'extrusion est dans un plan passant par la bande de collecteur de courant;
- le tube interne comprend une tête d'extrémité située en dehors du tube externe et formée d'une paroi lisse;
- selon l'alinéa précédent, la tête d'extrémité comprend une partie hémisphérique et la sortie est placée au sommet de ladite partie hémisphérique ;
- le dispositif de fabrication comprend un organe d'étanchéité disposé entre la tête d'extrémité et le tube externe;
- selon l'alinéa précédent, la tête d'extrémité comprend une jupe cylindrique faisant face à une portion annulaire du tube externe ; et le moyen d'étanchéité est pris en sandwich entre ladite jupe cylindrique et ladite portion du tube externe ;
- le dispositif de fabrication comprend des moyens de mise sous tension de la bande de collecteur de courant ;
- le dispositif de fabrication comprend un moyen de chauffage disposé autour de l'extrudeuse;
- le dispositif de fabrication comprend un moyen de séchage d'électrode disposé en aval de l'extrudeuse.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig.1] - la figure 1 est une vue schématique représentant une coupe longitudinale d'un dispositif de fabrication d'électrode selon un exemple de réalisation de l'invention;
[Fig.2] - la figure 2 est la même vue que figure 1 et représente plus en détail d'une extrudeuse et d'un moyen de séchage faisant partie du dispositif de fabrication d'électrode de la figure 1 ;
[Fig.3] - la figure 3 comprend trois vues schématiques 3A à 3C représentant la coupe transversale du dispositif de fabrication d'électrode de la figure 1 respectivement selon trois plans A-A, B-B et C-C illustrés sur la figure 1;
[Fig.4] - la figure 4 est une vue schématique représentant une coupe longitudinale d'une vis d'extrusion faisant partie du dispositif de fabrication d'électrode de la figure 1.

### Description détaillée de l'invention

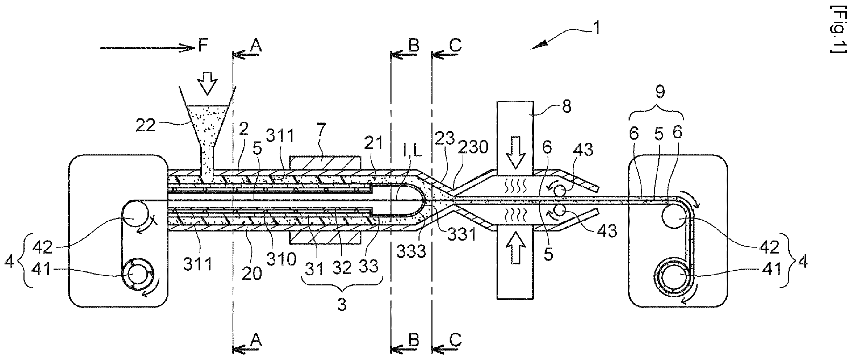

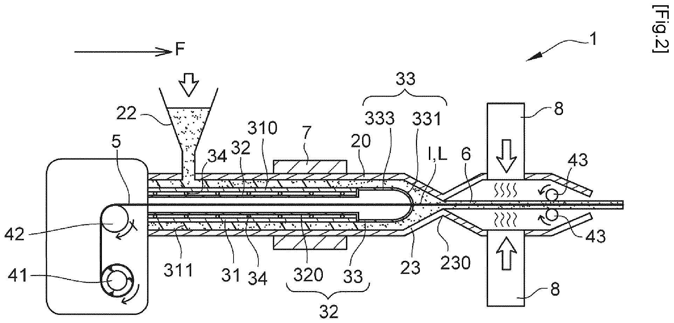

Sur la figure 1 et sur la figure 2, est représenté un dispositif de fabrication d'électrode 1, ci-après appelé dispositif 1, qui a pour fonction de former une bande continue d'électrode 9 composée d'une bande de collecteur de courant 5 et deux couches de matériau composite actif électrochimiquement 6 disposées de part et d'autre de la bande de collecteur de courant 5.

Dans l'exemple illustré, le dispositif 1 comprend une extrudeuse 2 dans laquelle est introduit un matériau composite actif électrochimiquement sous forme liquide ou en poudre. Ici, on entend par matériau composite actif électrochimiquement un mélange de matériaux comprenant un ou plusieurs matériaux actifs électrochimiquement (exemple : matériaux actifs de type LiNiₓMn_{y}Co_{z}O₂ ou graphite), un ou plusieurs additifs conducteurs électroniques (exemple : noir de carbone), et un ou plusieurs liants polymériques (exemple : Fluorure de polyvinylidène). Dans le cas d'une batterie tout solide, le mélange peut comprendre un ou plusieurs matériaux conducteurs ioniques de type polymère et/ou céramique (exemple : Poly (oxyde d'éthylène) + LiTFSI).

Le matériau composite actif électrochimiquement, une fois introduit dans l'extrudeuse, est mélangé et poussé de l'amont vers l'aval dans une direction d'extrusion illustrée par la flèche F sur la figure 1. Dans la suite de la description, le matériau composite actif électrochimiquement sera appelé le matériau composite.

Dans cet exemple, l'extrudeuse 2 comprend un fourreau 20 cylindrique fixe autour de l'axe de révolution L, une tête d'extrusion 23 tronconique formée en un seul bloc avec le fourreau 20. Le fourreau 20 délimite une chambre de mélange 21 et orienté de sorte que l'axe de révolution L du fourreau 20 soit parallèle à la direction d'extrusion F. La tête d'extrusion 23 comprend une filière 230 qui délivre la bande d'électrode 9 avec une section transversale rectangulaire. Bien entendu, la filière 230 peut être conçue différemment pour conférer d'autres formes à la bande d'électrode 9.

L'extrudeuse 2 comprend une trémie d'alimentation 22 qui communique avec la chambre de mélange 21 et dans laquelle le matériau composite est versé pour alimenter l'extrudeuse 2.

En outre, l'extrudeuse 2 comprend une vis d'extrusion 3 disposée dans la chambre de mélange 21 de manière à ce que l'axe principal I de la vis d'extrusion 3 soit confondu avec l'axe de révolution L du fourreau 20.

Selon l'invention et comme dans cet exemple, la vis d'extrusion 3 comprend un tube externe 31 monté mobile en rotation sur lui-même dans la chambre de mélange 21. Le tube externe 31 comprend un tronc cylindrique 310 et une pale 311 disposée de manière hélicoïdale autour du tronc 310. Lorsque le tube externe 21 est en rotation, la pale 311 est en mouvement, mélange le matériau composite et le fait avancer longitudinalement vers l'aval selon la direction d'extrusion F. La rotation du tube externe 31 est commandée par un moteur non illustré sur les figures.

En d'autres termes, la pale 311 et le moteur constituent des moyens d'entraînement pour mélanger le matériau composite et pour provoquer un déplacement dudit matériau vers la tête d'extrusion 23.

La vis d'extrusion 3 comprend également un tube interne 32 présentant un diamètre inférieur à celui du tube externe 31 et une longueur supérieure à celle du tube externe 31. Le tube interne 32, ainsi conçu, est disposé en partie à l'intérieur du tube externe 31 et de manière coaxiale avec dudit tube externe 31.

Précisément, le tube interne 32 est composé d'une partie cylindrique 320 et d'une tête d'extrémité 33. La partie cylindrique 320, présentant une longueur sensiblement égale à celle du tube externe 31, se trouve dans le tube externe 31. Quant à la tête d'extrémité 33, celle-ci est située en dehors du tube externe 31. Autrement dit, la tête d'extrémité 33 est située à la suite de la section de mélange où se trouve le tube externe 31 avec sa pale 311. Comme illustré sur les figures 1, 2 et 4, la tête d'extrémité 33 comprend une partie cylindrique 333 suivie d'une partie hémisphérique 331. Vue de côté, la tête d'extrémité 33 dans l'exemple a la forme d'un obus.

Une fente traversante 330 est pratiquée sur la partie sommitale 331. La fente traversante 330 est orientée selon une direction transversale T perpendiculaire à la direction d'extrusion F. La direction d'extrusion F et la direction transversale T appartiennent à un plan horizontal.

Par ailleurs, le tube interne 32 est immobile par rapport au fourreau 20 et ne suit donc pas le mouvement en rotation du tube externe 31. Ici, des roulements à billes 34 sont mis entre les deux tubes afin de rendre indépendant le mouvement des deux tubes.

Durant le fonctionnement de l'extrudeuse 2, le matériau composite mû par le tube externe 31 et par ses moyens d'entraînement risque de se trouver dans l'espace entre le tube externe 31 et le tube interne 32. Afin d'éviter cette infiltration, un organe d'étanchéité est mis entre les deux tubes.

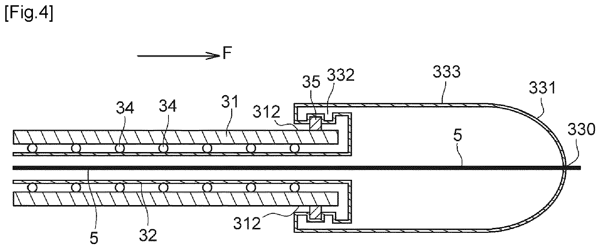

Ici, un organe d'étanchéité 35 est placé au niveau de la tête d'extrémité 33. En effet, comme observé sur la figure 4, la tête d'extrémité 33 comprend une jupe cylindrique 332 orientée parallèlement à la direction d'extrusion F.

La jupe cylindrique 332 fait face à une portion annulaire 312 du tube externe 31. L'organe d'étanchéité 35 est interposé entre la jupe cylindrique 332 et la portion annulaire 312. Ici, l'organe d'étanchéité 35 peut être un joint à lèvre ou un roulement à billes étanche permettant de respecter à la fois la rotation du tube externe 31 et l'immobilité du tube interne 32.

Selon l'invention et comme dans l'exemple illustré, le dispositif 1 comprend en outre des moyens d'avance et de déroulement configurés pour convoyer la bande de collecteur de courant 5 selon la direction d'extrusion F à travers le tube interne 32 et jusqu'à la tête d'extrusion 23. La bande de collecteur de courant 5 sort de l'extrudeuse 2 par la filière 230.

Ici, les moyens d'avance et de déroulement comprennent deux paires 4 de rouleaux rotatifs disposées respectivement en amont et en aval de l'extrudeuse 2. Chacune des paires 4 est composée d'un rouleau inférieur 41 de déroulement et d'un rouleau supérieur 42 d'avancement.

Les deux paires de rouleaux rotatifs 4 sont positionnées à la même hauteur afin de garantir que la bande de collecteur de courant 5 soit parallèle à la direction d'extrusion F.

Par ailleurs, les paires de rouleaux rotatifs 4 sont positionnées par rapport à l'extrudeuse 2 de façon que lorsque la bande de collecteur de courant 5 rentre à l'intérieur du tube interne 32, celle-ci soit en suspension, c'est-à-dire qu'elle n'est pas en contact avec les parois du tube interne 32. Pour faciliter la mise en suspension de la bande 5, en plus du positionnement des paires de rouleaux rotatifs 4 par rapport à l'extrudeuse 2, la bande de collecteur de courant 5 peut être dimensionnée de sorte que sa largeur soit inférieure au diamètre du tube interne 32. De cette manière, on évite des frottements entre la bande de collecteur de courant 5 et l'intérieur du tube interne 32.

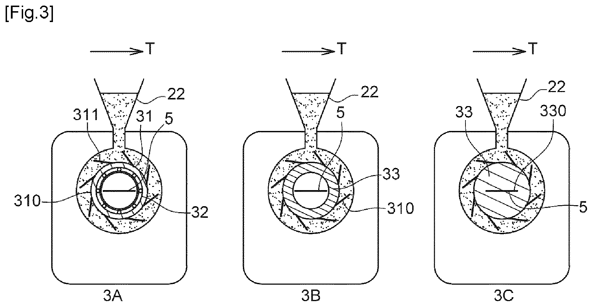

L'état en suspension de la bande de collecteur de courant 5 dans le tube interne peut être observé sur les figures 3A et 3B.

Sur la figure 3C, on voit que la bande de collecteur de courant 5 sort du tube interne 32 par la fente traversante 330 dont la section transversale est légèrement plus grande que celle de la bande pour éviter tout contact entre la fente 330 et la bande 5. La fente traversante 330 constitue la sortie du tube interne 32.

L'agencement entre les paires de rouleaux rotatifs 4 et l'extrudeuse 2 peut être également fait de façon que la bande de collecteur de courant 5 soit dans un plan symétrique de l'extrudeuse 2. Ici, le plan symétrique de l'extrudeuse 2 est le plan horizontal passant par l'axe de révolution L du fourreau 20, et donc par l'axe principal I de la vis 3, car ces deux axes sont confondus. La bande de collecteur de courant 5 étant positionnée dans le plan symétrique, elle est recouverte de part et d'autre par la même quantité de matériau composite en sortant du tube interne 32. Ceci garantit une répartition équilibrée de la pression de chaque côté de la bande de collecteur de courant 5, ce qui permet d'éviter que celle-ci vrille ou se torde.

Par ailleurs, la géométrie de la tête d'extrémité 33 contribue également à éviter la déformation de la bande de collecteur de courant 5 lors du dépôt du matériau composite sur celle-ci. En effet, comme expliqué plus haut, la tête d'extrémité 33 est formée d'une paroi lisse. Ceci permet de réduire le mouvement de rotation du matériau composite lorsqu'il rentre en contact avec la tête d'extrémité, de sorte que l'avancement du matériau composite se fait principalement par un mouvement en translation.

En outre, grâce à la forme arrondie de la partie hémisphérique 331, le matériau composite est guidé progressivement vers la sortie 330 d'où apparaît la bande de collecteur de courant 5. Ainsi, le dépôt du matériau composite sur la bande de collecteur est réalisé de manière fluide et délicate. A la sortie de l'extrudeuse 2, on obtient une bande d'électrode à double revêtement composée d'une bande de collecteur de courant 5 et de deux couches de matériau composite 6 situées de part et d'autre de la bande de collecteur.

De manière optionnelle, pour faciliter le mélange du matériau composite au sein de la chambre de mélange, un dispositif de chauffage 7 peut être disposé autour du fourreau 20.

Le dispositif 1 comprend en outre un moyen de séchage 8 est placé en aval de l'extrudeuse 2 pour figer les couches de matériau composite 6 sur la bande de collecteur de courant 6. Le moyen de séchage 8 peut utiliser de l'air froid ou de l'air chaud en fonction de la nature du matériau composite. Le moyen de séchage 8 est suivi par un poste de laminage 43 comprenant deux rouleaux contrarotatifs entre lesquels passe la bande d'électrode séchée.

Après cette étape de laminage, la bande d'électrode 9 est enroulée autour d'un mandrin pour former une bobine d'électrode prête être stockée. Alternativement, la bande d'électrode à double revêtement est ensuite découpée pour créer des électrodes individuelles.

Les électrodes formées à partir de la bande d'électrode 9 permettent de réduire le nombre de collecteurs de courant dans une batterie, et donc de diminuer la taille de la batterie. Ainsi, la batterie à taille réduite répond donc aux contraintes liées à l'espace disponible de plus en plus restreint dans le compartiment moteur.

## Revendications

1. Dispositif (1) de fabrication d'une bande d'électrode (9) pour batterie, ladite bande d'électrode (9) comprenant au moins une couche de matériau composite actif électrochimiquement (6) et une bande de collecteur de courant (5), le dispositif (1) de fabrication comprenant :
- une extrudeuse (2) comprenant :
- un fourreau (20) délimitant une chambre de mélange (21),
- une tête d'extrusion (23) donnant la forme à la bande d'électrode (9) sortant de l'extrudeuse ; et
- une vis d'extrusion (3) disposée dans la chambre de mélange (21),
le dispositif (1) de fabrication étant **caractérisé en ce que** :
la vis d'extrusion (3) comprend :
- un tube externe (31) monté mobile en rotation sur lui-même dans la chambre de mélange (21), ledit tube externe (31) comprenant des moyens d'entraînement (310, 311) configurés pour mélanger le matériau composite actif dans la chambre de mélange (21) et pour provoquer un déplacement dudit matériau vers l'aval en direction de la tête d'extrusion (23);
- un tube interne (32) disposé au moins partiellement à l'intérieur du tube externe (31) et de manière coaxiale avec dudit tube externe (31), ledit tube interne (32) étant immobile par rapport au fourreau (20) et comprenant une sortie (330) située en amont de la tête d'extrusion (23),
et il comprend des moyens d'avance et de déroulement (4, 41, 42) configurés pour convoyer la bande de collecteur de courant (5) à travers le tube interne (32) et jusqu'à la tête d'extrusion (23).

2. Dispositif (1) selon la revendication 1, **caractérisé en ce que** l'extrudeuse (2) et les moyens d'avance et de déroulement (4, 41, 42) sont agencés l'un par rapport à l'autre de manière à mettre la bande de collecteur de courant (5) en suspension dans le tube interne (32).

3. Dispositif (1) selon la revendication 1 ou la revendication 2, **caractérisé en ce que** :
- le fourreau (20) présente une forme de révolution dont l'axe de révolution (L) est confondu avec un axe principal (I) de la vis d'extrusion (3); et
- l'axe principal (I) est dans un plan passant par la bande de collecteur de courant (5).

4. Dispositif (1) selon l'une des revendications précédentes, **caractérisé en ce que** le tube interne (32) comprend une tête d'extrémité (33) située en dehors du tube externe (31) et formée d'une paroi lisse.

5. Dispositif (1) selon la revendication précédente, **caractérisé en ce que** la tête d'extrémité (33) comprend une partie hémisphérique (331) et **en ce que** la sortie (330) est placée au sommet de ladite partie hémisphérique (331).

6. Dispositif (1) selon la revendication 4 ou selon la revendication 5, **caractérisé en ce qu'**il comprend un organe d'étanchéité (35) disposé entre la tête d'extrémité (33) et le tube externe (31).

7. Dispositif (1) selon la revendication précédente, **caractérisé en ce que** la tête d'extrémité (33) comprend une jupe cylindrique (332) faisant face à une portion annulaire (312) du tube externe (31), et **en ce que** l'organe d'étanchéité (35) est inséré entre ladite jupe cylindrique (332) et ladite portion (312) du tube externe.

8. Dispositif (1) selon l'une des revendications précédentes, caractérisé ce qu'il comprend un moyen de chauffage (7) disposé autour de l'extrudeuse (2).

9. Dispositif selon l'une des revendications précédentes, **caractérisé en ce qu'**il comprend un moyen de séchage (8) disposé en aval de l'extrudeuse (2).

## Patentansprüche

1. Vorrichtung (1) zur Herstellung eines Elektrodenstreifens (9) für eine Batterie, wobei der Elektrodenstreifen (9) mindestens eine Schicht aus elektrochemisch wirksamem Verbundmaterial (6) und einen Stromabnehmerstreifen (5) umfasst, wobei die Herstellungsvorrichtung (1) Folgendes umfasst:
- einen Extruder (2), der Folgendes umfasst:
- eine Buchse (20), die eine Mischkamer (21) begrenzt,
- einen Extrusionskopf (23), der dem aus dem Extruder austretenden Elektrodenstreifen (9) seine Form verleiht, und
- eine Extrusionsschnecke (3), die in der Mischkammer (21) angeordnet ist,
wobei die Herstellungsvorrichtung (1) **dadurch gekennzeichnet ist, dass**:
die Extrusionsschnecke (3) Folgendes umfasst:
- ein Außenrohr (31), das auf sich selbst drehbeweglich in der Mischkammer (21) montiert ist, wobei das Außenrohr (31) Antriebsmittel (310, 311) umfasst, die zum Mischen des wirksamen Verbundmaterials in der Mischkammer (21) und zum Veranlassen eines Verschiebens des Materials stromabwärts in Richtung des Extrusionskopfs (23) ausgestaltet sind,
- ein Innenrohr (32), das mindestens teilweise im Inneren des Außenrohrs (31) und koaxial mit dem Außenrohr (31) angeordnet ist, wobei das Innenrohr (32) bezüglich der Buchse (20) unbeweglich ist und einen stromaufwärts von dem Extrusionskopf (23) angeordneten Ausgang (330) umfasst,
und sie Vorschub- und Abwickelmittel (4, 41, 42) umfasst, die dazu ausgestaltet sind, den Stromabnehmerstreifen (5) durch das Innenrohr (32) bis zum Extrusionskopf (23) zu befördern.

2. Vorrichtung (1) nach Anspruch 1, **dadurch gekennzeichnet, dass** der Extruder (2) und die Vorschub- und Abwickelmittel (4, 41, 42) bezüglich einander so angeordnet sind, dass der Stromabnehmerstreifen (5) in dem Innenrohr (32) aufgehängt wird.

3. Vorrichtung (1) nach Anspruch 1 oder Anspruch 2, **dadurch gekennzeichnet, dass**:
- die Buchse (20) rotationssymmetrisch ist, wobei die Drehachse (L) mit einer Hauptachse (I) der Extrusionsschnecke (3) zusammenfällt, und
- die Hauptachse (I) in einer durch den Stromabnehmerstreifen (5) gehenden Ebene liegt.

4. Vorrichtung (1) nach einem der vorhergehenden Ansprüche, **dadurch gekennzeichnet, dass** das Innenrohr (32) einen Endkopf (33) umfasst, der außerhalb des Außenrohrs (31) angeordnet und durch eine glatte Wand gebildet ist.

5. Vorrichtung (1) nach dem vorhergehenden Anspruch, **dadurch gekennzeichnet, dass** der Endkopf (33) einen halbkugelförmigen Teil (331) umfasst und dass der Ausgang (330) am Gipfel des halbkugelförmigen Teils (331) platziert ist.

6. Vorrichtung (1) nach Anspruch 4 oder Anspruch 5, **dadurch gekennzeichnet, dass** sie ein Dichtungsglied (35) umfasst, das zwischen dem Endkopf (33) und dem Außenrohr (31) angeordnet ist.

7. Vorrichtung (1) nach dem vorhergehenden Anspruch, **dadurch gekennzeichnet, dass** der Endkopf (33) eine zylindrische Schürze (332) umfasst, die einem ringförmigen Abschnitt (312) des Außenrohrs (31) zugewandt ist, und dass das Dichtungsglied (35) zwischen der zylindrischen Schürze (332) und dem Abschnitt (312) des Außenrohrs eingesetzt ist.

8. Vorrichtung (1) nach einem der vorhergehenden Ansprüche, **dadurch gekennzeichnet, dass** sie ein um den Extruder (2) angeordnetes Erhitzungsmittel (7) umfasst.

9. Vorrichtung nach einem der vorhergehenden Ansprüche, **dadurch gekennzeichnet, dass** sie ein stromabwärts von dem Extruder (2) angeordnetes Trocknungsmittel (8) umfasst.

## Claims

1. Device (1) for manufacturing an electrode strip (9) for a battery, said electrode strip (9) comprising at least one layer of electrochemically active composite material (6) and a current collector strip (5), the manufacturing device (1) comprising:
- an extruder (2) comprising :
- a sheath (20) delimiting a mixing chamber (21),
- an extrusion head (23) giving the electrode strip (9) leaving the extruder its shape; and
- an extrusion screw (3) arranged in the mixing chamber (21),
the manufacturing device (1) being **characterized in that**:
the extrusion screw (3) comprises:
- an outer tube (31) mounted such that it rotates on itself in the mixing chamber (21), said outer tube (31) comprising drive means (310, 311) configured to mix the active composite material in the mixing chamber (21) and to cause said material to move downstream toward the extrusion head (23);
- an inner tube (32) arranged at least partially inside the outer tube (31) and coaxially with said outer tube (31), said inner tube (32) being stationary relative to the sheath (20) and comprising an outlet (330) located upstream of the extrusion head (23), and it comprises advancing and unwinding means (4, 41, 42) configured to convey the current collector strip (5) through the inner tube (32) as far as the extrusion head (23) .

2. Device (1) according to Claim 1, **characterized in that** the extruder (2) and the advancing and unwinding means (4, 41, 42) are arranged relative to one another in such a way as to place the current collector strip (5) in suspension inside the inner tube (32).

3. Device (1) according to Claim 1 or Claim 2, **characterized in that**:
- the sheath (20) has a shape of revolution, the axis of revolution (L) of which is coincident with a main axis (I) of the extrusion screw; (3); and
- the main axis (I) is in a plane passing through the current collector strip (5).

4. Device (1) according to one of the preceding claims, **characterized in that** the inner tube (32) includes an end head (33) located outside the outer tube (31) and formed by a smooth wall.

5. Device (1) according to the preceding claim, **characterized in that** the end head (33) comprises a hemispherical part (331) and **in that** the outlet (330) is placed at the tip of said hemispherical part (331).

6. Device (1) according to Claim 4 or according to Claim 5, **characterized in that** it comprises a sealing member (35) arranged between the end head (33) and the outer tube (31).

7. Device (1) according to the preceding claim, **characterized in that** the end head (33) comprises a cylindrical skirt (332) facing an annular portion (312) of the outer tube (31), and **in that** the sealing means (35) is inserted between said cylindrical skirt (332) and said portion (312) of the outer tube.

8. Device (1) according to one of the preceding claims, **characterized in that** it comprises a heating means (7) arranged around the extruder (2).

9. Device according to one of the preceding claims, **characterized in that** it comprises a drying means (8) arranged downstream of the extruder (2).
